# FASCICULE DE BREVET EUROPEEN

(11) **EP 3 213 601 B1**
(45) Date de publication et mention de la délivrance du brevet: **01.12.2021**
(21) Numéro de dépôt: 15798160.6
(22) Date de dépôt: 29.10.2015
(51) Int. Cl.: H05B 6/10, H05B 6/36, H05B 6/44

(54) **STATION DE CHAUFFAGE DE FLUIDES CIRCULANT DANS UN RESEAU DE CONDUITES SOUS-MARINES**
STATION ZUM ERWÄRMEN VON DURCH EIN NETZWERK AUS UNTERWASSERROHRLEITUNGEN FLIESSENDEN FLÜSSIGKEITEN
STATION FOR HEATING FLUIDS FLOWING THROUGH A NETWORK OF SUBMARINE PIPELINES

(30) Priorité: 31.10.2014 FR 1460511
(43) Date de publication de la demande: 06.09.2017
(73) Titulaire: SAIPEM S.A., 78180 Montigny-le-Bretonneux (FR)
(72) Inventeur: SETTOUTI, Narimane, 75015 Paris (FR); RUER, Jacques, 78112 Fourqueux (FR); MUGUERRA, Philippe, 78210 Saint Cyr l'Ecole (FR); SPUDIC, Damien, 92500 Rueil-Malmaison (FR)
(74) Mandataire: Cabinet Beau de Loménie
(86) Numéro de dépôt international: PCT/FR2015/052919
(87) Numéro de publication internationale: WO 2016/066968

(56) Documents cités:
- WO-A1-2007/055592
- WO-A2-2012/064641
- DE-B- 1 028 710
- PL-B1- 86 733
- US-A1- 2013 233 429
- None

## Description

### Arrière-plan de l'invention

La présente invention se rapporte au domaine général des conduites sous-marines reposant au fond de la mer et assurant une liaison entre des puits de production d'hydrocarbures sous-marins, notamment de pétrole et de gaz, et une installation de surface, par exemple une unité flottante de production, de stockage et de déchargement.

Dans un même champ de production d'hydrocarbures offshore, il est courant d'exploiter plusieurs puits qui peuvent être séparés les uns des autres de plusieurs kilomètres, voire dizaines de kilomètres. Les fluides issus de ces différents puits doivent être collectés par des conduites sous-marines posées au fond de la mer et transférés par des conduites de liaison fond/surface vers une installation de surface, par exemple un navire ou un point de collecte terrestre, qui va les recueillir pour les stocker (et éventuellement les traiter).

Par ailleurs, du fait de leur extraction à une grande profondeur dans le sous-sol, les fluides (pétrole et gaz) issus des puits de production d'hydrocarbures sous-marins sortent à une température relativement élevée au niveau du fond de la mer (typiquement de l'ordre de 70°C). L'eau de mer étant généralement froide, surtout aux grandes profondeurs où elle est typiquement de 4°C, si aucune disposition n'est prise pour conserver la chaleur des fluides en sortie des puits de production, ceux-ci vont se refroidir progressivement en parcourant les kilomètres de conduites sous-marines. Or, ces fluides contiennent divers composés chimiques pour lesquels un refroidissement fait apparaître des phénomènes gênants pour le maintien de bonnes conditions de circulation.

Ainsi, les molécules de gaz, notamment le méthane, se combinent aux molécules d'eau pour former, à basse température, des cristaux d'hydrates. Ces derniers peuvent coller aux parois, s'y agglomérer et conduire à la formation de bouchons capables de bloquer la conduite sous-marine. De même, la solubilité dans le pétrole des composés à haut poids moléculaires, comme les paraffines ou les asphaltènes, diminue lorsque la température baisse, ce qui donne naissance à des dépôts solides capables eux-aussi de bloquer la conduite sous-marine.

L'une de ces solutions connues pour tenter de remédier à ces problèmes consiste à isoler thermiquement les conduites sous-marines afin de conserver autant que possible la chaleur initiale des fluides transportés. Plusieurs technologies sont disponibles à cet effet, dont par exemple la mise en œuvre de conduites coaxiales comprenant une conduite interne véhiculant les fluides et une conduite externe coaxiale à la précédente en contact avec le milieu sous-marin, l'espace annulaire entre ces conduites interne et externe étant rempli d'un matériau d'isolation thermique ou encore vidé de tout gaz.

Cependant, cette solution d'isolation thermique des conduites sous-marines ne permet au mieux que de ralentir le refroidissement inéluctable des fluides transportés. Notamment, si la distance à parcourir au fond de l'eau est trop importante, ou si le débit de fluide est ralenti voire stoppé pour un certain temps, la température des fluides peut descendre en-dessous d'un seuil critique.

Une autre solution connue pour éviter la formation de bouchons dans les conduites sous-marines consiste à nettoyer fréquemment ces dernières en faisant circuler à l'intérieur de celles-ci des racleurs (ou « pig » en anglais) qui enlèvent des parois les éventuels dépôts.

Toutefois, le raclage d'une conduite sous-marine ne peut au mieux qu'éliminer des dépôts de tailles relativement modestes pour éviter tout risque de voir le racleur se coincer dans la conduite. Aussi, malgré le recours au raclage, cette solution nécessite quand même d'isoler thermiquement les conduites pour limiter autant que possible la formation de dépôts solides à l'intérieur de celles-ci.

Encore une autre solution connue consiste à chauffer les conduites sous-marines sur toute leur longueur grâce à un ou plusieurs câbles électriques qui sont enroulés autour des conduites pour les chauffer par effet Joule. Cette solution qui est appelée « chauffage tracé » (ou « trace heating » en anglais) permet de maintenir les fluides transportés dans les conduites sous-marines à une température supérieure à un seuil critique sur tout leur trajet depuis le puits de production jusqu'à l'installation de surface. Le document DE 1 028 710 décrit une station de chauffage selon le préambule de la revendication 1.

Cette dernière solution présente d'évidents problèmes liés à l'installation de tels câbles électriques de chauffage sur toute la longueur des conduites sous-marines, avec les coûts importants que cela représente en termes d'installation et de maintenance. Par ailleurs, le chauffage tracé est basé sur la continuité de l'installation tout le long des conduites sous-marines. Or, si cette continuité venait à être rompue pour une raison ou une autre à un endroit des conduites, toute l'installation se trouverait hors service. Cette contrainte impose donc de considérer ce type de chauffage uniquement pour les phases dites de préservation des fluides transportés, et non pour les phases opérationnelles de fonctionnement.

### Objet et résumé de l'invention

La présente invention a donc pour but principal de proposer une station de chauffage qui ne présente pas les inconvénients précités.

Ce but est atteint grâce à une station de chauffage de fluides selon la revendication 1.

La station de chauffage selon l'invention est remarquable par sa grande souplesse d'utilisation : en disposant judicieusement une ou plusieurs stations de chauffage le long des conduites sous-marines, il est possible d'assurer un niveau de température des fluides transportés suffisant sur une très grande longueur de conduites sous-marines. A titre d'exemple, sur un réseau de conduites sous-marines de 240km de long, et dans le cas d'une gestion du chauffage qui exigerait en phase de fonctionnement normal un chauffage continu des conduites, ces stations de chauffage pourraient être raccordées tous les 30km environ le long des conduites.

De plus, ces stations de chauffage sont entièrement amovibles et peuvent donc être aisément déconnectées des conduites sous-marines pour être déplacées en un autre endroit du réseau ou pour subir une opération de maintenance ou de réparation. Elles peuvent également être intégrées à des réseaux de conduites existants car leur raccordement sur une conduite sous-marine ne nécessite pas d'importantes modifications du réseau. En cas de défaillance d'une station de chauffage, le reste de la ligne de fonctionnement ne s'en trouvera pas affecté (les autres stations de chauffage ne seront pas mises hors service).

Les stations de chauffage selon l'invention présentent ainsi une grande facilité d'installation sur un réseau de conduites (elles sont amovibles et indépendantes les unes des autres), une très grande souplesse d'utilisation (elles peuvent être utilisées en phase de fonctionnement normal, en phase de préservation des fluides, etc.), et un faible coût d'installation et d'entretien.

Avantageusement, le conduit de chauffage comprend une pluralité d'enroulements de conduit munis chacun d'une section de conduit autour de laquelle est enroulé un solénoïde. Ainsi, il est possible de chauffer une importante longueur de conduit sur un faible encombrement au sol. Dans ce cas, les enroulements de conduit peuvent former un serpentin.

Le conduit de chauffage peut comprendre un nombre d'enroulements de conduit qui est un multiple du nombre de phases du courant électrique d'alimentation, les enroulements de conduit étant chacun d'une section de conduit autour de laquelle est enroulé un solénoïde, les solénoïdes étant montés électriquement de manière à obtenir un montage polyphasé. Ainsi, le conduit de chauffage peut comprendre six enroulements de conduit, les solénoïdes étant montés par séries de deux pour former trois paires de solénoïdes alimentées en courant triphasé.

De préférence, la station de chauffage comprend en outre un isolant intercalé entre le conduit de chauffage et le solénoïde. La présence d'un isolant permet d'assurer une isolation thermique du conduit de chauffage pour éviter toute déperdition de chaleur vers l'extérieur.

La station de chauffage comprend en outre des culasses magnétiques disposées de part et d'autre du solénoïde pour contenir le champ électromagnétique créé par celui-ci. La présence des culasses magnétiques permet de concentrer le flux du champ électromagnétique vers le conduit de chauffage.

Le solénoïde peut être enroulé autour d'une partie du conduit de chauffage en au moins deux couches superposées. Le solénoïde peut aussi être noyé dans une résine.

Le conduit de chauffage et le solénoïde sont avantageusement logés dans une enceinte étanche qui est amovible et apte à être raccordée à une conduite sous-marine de transport de fluides.

Dans ce cas, une paroi de l'enceinte peut comprendre une couche de matériau isolant thermique et l'enceinte peut être destinée à être raccordée une conduite sous-marine de transport de fluides de manière directe ou au moyen d'une conduite de raccordement.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue schématique d'une station de chauffage selon un premier mode de réalisation de l'invention ;
- la figure 2 est une vue schématique d'une station de chauffage selon une variante du premier mode de réalisation ;
- la figure 3 est une vue schématique d'une station de chauffage selon un deuxième mode de réalisation de l'invention ; et
- les figures 4 à 7 montrent différentes caractéristiques des stations de chauffage selon l'invention.

### Description détaillée de l'invention

L'invention s'applique à tout réseau de conduites sous-marines assurant une liaison entre au moins un puits de production d'hydrocarbures sous-marin et une installation de surface.

Un tel réseau de conduites sous-marines a pour but de transporter les hydrocarbures (pétrole et gaz) provenant d'un ou plusieurs puits de production sous-marins pour les acheminer vers une installation de surface, par exemple une unité flottante de production, de stockage et de déchargement (également appelée FPSO pour « Floating Production Storage and Offloading » en anglais).

Ces réseaux comprennent généralement plusieurs conduites sous-marines posées au fond de la mer et dans lesquelles circulent les fluides provenant des puits de production.

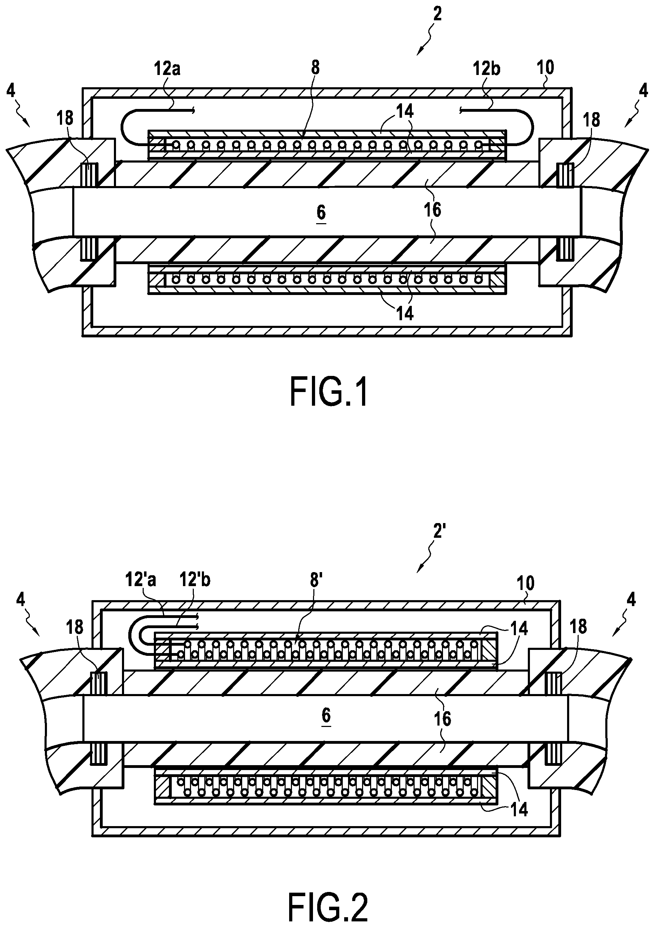

Pour maintenir les fluides transportés dans ces conduites sous-marines à une température supérieure à un seuil critique permettant d'éviter la formation de dépôts à l'intérieur desdites conduites, l'invention prévoit de raccorder les conduites à une ou plusieurs stations de chauffage amovibles telles que celle représentée sur la figure 1.

La station de chauffage 2 représentée sur la figure 1 est raccordée de manière amovible sur une conduite sous-marine 4. Elle est commandée depuis l'installation en surface (non représentée sur la figure) en fonction notamment du mode de fonctionnement du réseau (typiquement : phase de fonctionnement normal, phase de préservation ou phase de redémarrage de la production).

La station de chauffage 2 selon l'invention fonctionne sur le principe de l'induction électromagnétique. A cet effet, elle comprend au moins un conduit de chauffage 6 réalisé dans un matériau conducteur (par exemple en métal, en acier inoxydable, en carbone, etc.) et qui est raccordé à une conduite sous-marine 4 dans laquelle circulent les fluides en provenance de puits de production, et au moins un solénoïde 8 qui est enroulé autour d'une partie du conduit de chauffage et alimenté en courant électrique depuis l'installation de surface pour chauffer la partie de conduit de chauffage par induction électromagnétique.

Plus précisément, le conduit de chauffage 6 et le solénoïde 8 peuvent être logés à l'intérieur d'une enceinte étanche 10 qui repose au fond de la mer et qui peut être aisément déplacée en un autre endroit du réseau, par exemple pour subir une opération de maintenance ou de réparation (typiquement par l'intermédiaire d'un robot piloté depuis l'installation en surface). De façon avantageuse, l'enceinte 10 de la station de chauffage selon l'invention présente un faible encombrement au sol. Alternativement, le conduit de chauffage peut être directement dans l'eau, seule l'étanchéité du solénoïde étant assurée.

Sur l'exemple de réalisation de la figure 1, le solénoïde 8 est constitué par bobinage en une couche de spires d'un fil en cuivre qui est raccordé à une extrémité à un câble électrique d'entrée 12a et à l'extrémité opposée à un câble électrique de sortie 12b, ces câbles 12a, 12b étant alimentés en courant électrique depuis l'installation en surface.

A titre d'exemple, pour réaliser le solénoïde 8, on pourra utiliser un bobinage de 80 spires par mètre d'un fil en cuivre d'un diamètre de 8mm et qui est incorporé entre deux tubes 14 réalisés en plastique renforcé par des fibres de verre. Le volume interne délimité par les tubes 14 peut être rempli par une résine.

Toujours à titre d'exemple, on pourra appliquer aux bornes du solénoïde 8 ainsi assemblé une tension électrique de l'ordre de 2640V avec une intensité de 150A.

De préférence, la station de chauffage 2 comprend en outre un isolant 16 qui est intercalé entre le conduit de chauffage 6 et le solénoïde 8. Par exemple, cet isolant 16 pourra être réalisé à base de polypropylène, de polyuréthane ou de polyéthylène.

La présence d'un tel isolant 16 permet ainsi d'assurer une isolation thermique efficace du conduit de chauffage 6 pour éviter toute déperdition de chaleur vers l'extérieur.

Par ailleurs, en alternative ou en complément de cet isolant 16, la paroi de l'enceinte 10 peut comprendre une couche de matériau isolant thermique.

La station de chauffage 2 comprend encore deux culasses magnétiques 18 qui sont disposées de part et d'autre du solénoïde 8 pour contenir le champ électromagnétique créé par celui-ci. Par exemple, comme représenté sur l'exemple de réalisation de la figure 1, ces culasses 18 pourront être disposées autour du conduit de chauffage 6 à chaque extrémité de celui-ci.

Typiquement, chaque culasse 18 est composée d'un paquet de tôles magnétiques de 100mm d'épaisseur environ. En contenant le champ électromagnétique, ces culasses permettent de diminuer le besoin de courant inducteur pour une valeur de chauffage donnée. Par ailleurs, la présence de ces culasses permet d'éviter tout rayonnement électromagnétique en dehors du conduit de chauffage 6, ce qui évite toute interférence avec les équipements électroniques au voisinage.

La figure 2 représente une variante de réalisation dans laquelle le solénoïde 8' de la station de chauffage 2' enroulé autour du conduit de chauffage 6 en deux couches superposées.

Avec une telle disposition, il est possible de faire en sorte que le câble électrique d'entrée 12'a et le câble électrique de sortie 12'b soient positionnés à une même extrémité du solénoïde 8'. Ainsi, le raccordement de ces câbles 12'a, 12'b à l'installation en surface est plus simple à réaliser (par rapport à la disposition de la figure 1).

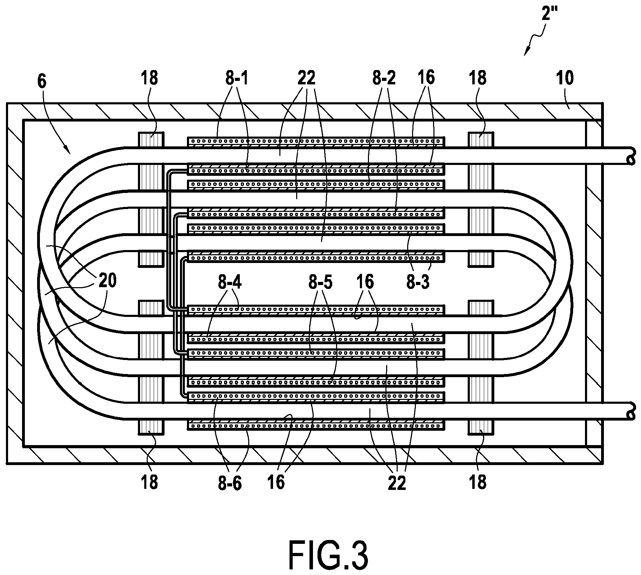

La figure 3 est une vue schématique d'une station de chauffage 2" selon un deuxième mode de réalisation de l'invention.

Dans ce mode de réalisation, le conduit de chauffage 6 de la station de chauffage 2" comprend une pluralité d'enroulements de conduit 20 (par exemple au nombre de six) munis chacun d'une section de conduit 22, par exemple rectiligne, autour de laquelle est enroulé un solénoïde 8.

Comme visible sur la figure 3, ces enroulements de conduit 20 forment un serpentin, ce dernier étant logé à l'intérieur d'une enceinte étanche 10. Par serpentin, on entend ici un conduit de chauffage qui est enroulé en spirale ou en hélice de manière à faire tenir une grande longueur de conduit dans une enceinte 10 de dimensions limitées.

A titre d'exemple, on pourra réaliser un serpentin comprenant six sections rectilignes de conduit 22 ayant chacune une longueur de 20m, ce qui permet de faire tenir 120m de portions de conduit de chauffage au sein d'une enceinte de faible encombrement au sol.

Chaque section rectiligne de conduit 22 de la station de chauffage 2" est chauffée par un solénoïde particulier. Plus précisément, la station de chauffage 2" de ce deuxième mode de réalisation comprend avantageusement six solénoïdes 8-1 à 8-6 qui sont montés par séries de deux pour former trois paires de solénoïdes. Ainsi, le solénoïde 8-1 est monté en série avec le solénoïde 8-4, le solénoïde 8-2 est monté en série avec le solénoïde 8-5 et le solénoïde 8-3 est monté en série avec le solénoïde 8-6.

Ces trois paires de solénoïdes ainsi formées sont de préférence alimentées depuis l'installation en surface en courant électrique triphasé. Par exemple, on utilisera pour chaque solénoïde un courant électrique d'intensité de 150A. Quant à la tension aux bornes de ce montage, elle dépendra du schéma de branchement électrique (en étoile ou en triangle). De plus, dans une variante non représentée, les trois paires de solénoïdes peuvent être montées en parallèle (plutôt qu'en série).

Avec une telle disposition, il est possible d'atteindre une puissance de chauffage du conduit de chauffage 6 qui atteint 1200 kW, ce qui permet de faire monter la température extérieure de ce conduit de chauffage jusqu'à 120°C.

Bien entendu, comme pour le premier mode de réalisation décrit en liaison avec les figures 1 et 2, la station de chauffage 2" peut également comprendre un isolant 16 qui est intercalé entre chaque section rectiligne de conduit 22 et chaque solénoïde 8-1 à 8-6. De même, des culasses magnétiques 18 peuvent être avantageusement disposées de part et d'autre des solénoïdes 8-1 à 8-6 pour contenir les champs électromagnétiques créés par celles-ci.

De plus, les sections de conduit autour desquelles sont enroulés les solénoïdes ne sont pas forcément rectilignes et l'agencement des solénoïdes peut être différent de celui décrit ici. De même, le nombre d'enroulements de conduit n'est pas nécessairement égal à six (il est de préférence un multiple du nombre de phases du courant électrique utilisé pour l'alimentation : typiquement de 4, 8, 12, etc. pour un courant biphasé, de 6, 9, 12, etc. pour un courant électrique triphasé, etc.).

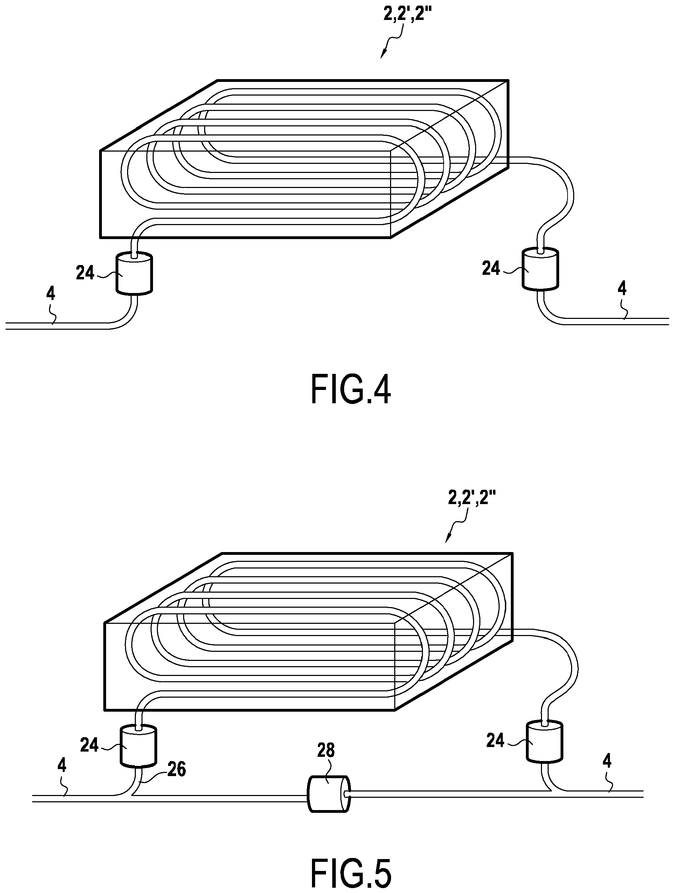

En liaison avec les figures 4 à 7, on décrira maintenant différentes caractéristiques communes aux différentes stations de chauffage décrites ci-avant.

Comme représenté sur la figure 5, la station de chauffage 2, 2', 2" est raccordée directement à une conduite sous-marine 4 par exemple au moyen de vannes 24.

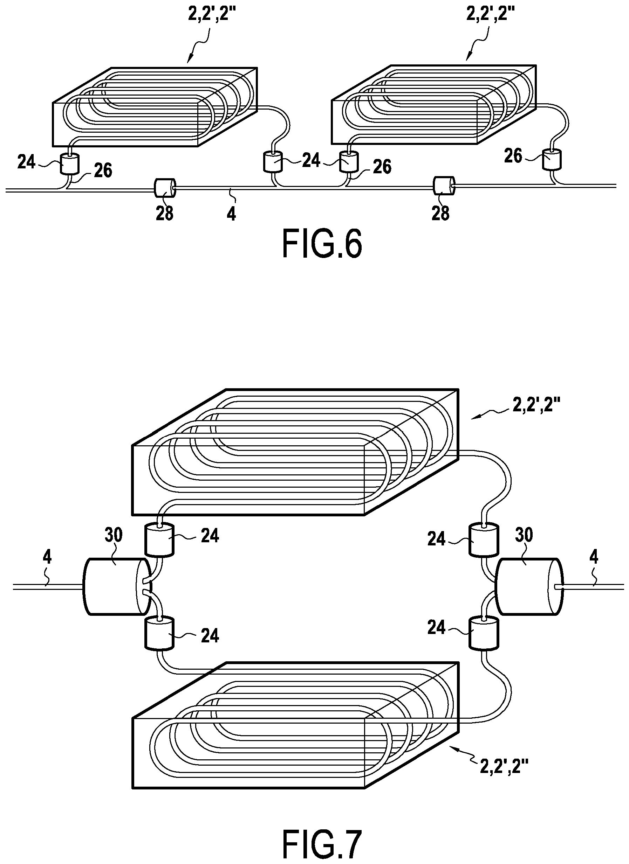

Alternativement, dans le mode de réalisation de la figure 6, la station de chauffage 2, 2', 2" est raccordée à une conduite sous-marine 4 au moyen d'une conduite de contournement 26 (ou conduite « by-pass ») reliée à la conduite sous-marine correspondante par des vannes 24. De plus, la conduite sous-marine 4 est équipée d'une vanne de contournement 28.

Dans le mode de réalisation de la figure 7, la conduite sous-marine 4 est raccordée à deux stations de chauffage 2, 2', 2" installées en série sur le principe de raccordement de la figure 6 (par l'intermédiaire de conduites de contournement 26 et le recours à des vannes de contournement 28).

Ce mode de réalisation prévoit ainsi une redondance des stations de chauffage dans lequel chaque station de chauffage est capable d'assurer seule le chauffage voulu des fluides transportés. En temps normal, une seule de ces deux stations de chauffage est utilisée ou les deux le sont à mi-puissance. Si l'une des stations de chauffage est retirée, l'autre station prend le relais.

Enfin, dans la variante de réalisation de la figure 8, la conduite sous-marine 4 est raccordée à deux stations de chauffage 2, 2', 2" installées en parallèle avec la présence en amont et en aval des stations de chauffage de dispositifs 30 permettant d'assurer un aiguillage d'un racleur destiné à racler les éventuels dépôts des parois.

## Revendications

1. Station de chauffage (2, 2', 2") de fluides circulant dans un réseau de conduites sous-marines, comprenant une enceinte étanche (10) à l'intérieur de laquelle sont logés au moins un conduit de chauffage (6) en matériau conducteur, et au moins un solénoïde (8, 8', 8-1 à 8-6) enroulé autour d'une partie du conduit de chauffage et alimenté en courant électrique pour chauffer la partie de conduit de chauffage par induction électromagnétique, **caractérisée en ce que** le conduit de chauffage est destiné à être raccordé de manière amovible à une conduite sous-marine (4) de transport de fluides, et ce qu'elle comprend en outre des culasses magnétiques (18) disposées autour du conduit de chauffage à chaque extrémité de celui-ci de part et d'autre du solénoïde pour contenir le champ électromagnétique créé par celui-ci.

2. Station de chauffage selon la revendication 1, dans laquelle le conduit de chauffage comprend une pluralité d'enroulements de conduit (20) munis chacun d'une section de conduit (22) autour de laquelle est enroulé un solénoïde (8-1 à 8-6).

3. Station de chauffage selon la revendication 2, dans laquelle les enroulements de conduit forment un serpentin.

4. Station de chauffage selon l'une des revendications 2 et 3, dans laquelle le conduit de chauffage comprend un nombre d'enroulements de conduit qui est un multiple du nombre de phases du courant électrique d'alimentation, les enroulements de conduit étant chacun d'une section de conduit autour de laquelle est enroulé un solénoïde, les solénoïdes étant montés électriquement de manière à obtenir un montage polyphasé.

5. Station de chauffage selon la revendication 4, dans laquelle le conduit de chauffage comprend six enroulements de conduit, les solénoïdes étant montés par séries de deux pour former trois paires de solénoïdes alimentées en courant triphasé.

6. Station de chauffage selon l'une quelconque des revendications 1 à 5, comprenant en outre un isolant (16) intercalé entre le conduit de chauffage (6) et le solénoïde (8, 8', 8-1 à 8-6).

7. Station de chauffage selon l'une quelconque des revendications 1 à 6, dans laquelle le solénoïde est enroulé autour d'une partie du conduit de chauffage en au moins deux couches superposées.

8. Station de chauffage selon l'une quelconque des revendications 1 à 7, dans laquelle le solénoïde est noyé dans une résine.

9. Station de chauffage selon l'une quelconque des revendications 1 à 8, dans laquelle le conduit de chauffage et le solénoïde sont logés dans une enceinte étanche (10) qui est amovible et apte à être raccordée à une conduite sous-marine (4) de transport de fluides.

10. Station de chauffage selon la revendication 9, dans laquelle une paroi de l'enceinte (10) comprend une couche de matériau isolant thermique.

11. Station de chauffage selon l'une des revendications 9 et 10, dans laquelle l'enceinte (10) est destinée à être raccordée une conduite sous-marine de transport de fluides de manière directe ou au moyen d'une conduite de raccordement (26).

## Patentansprüche

1. Station (2, 2', 2") zum Erwärmen von Fluids, die durch ein Netz aus Unterwasserrohrleitungen strömen, umfassend eine dichte Umhüllung (10), in deren Innerem mindestens eine Erwärmungsrohrleitung (6) aus einem leitenden Material und mindestens ein Solenoid (8, 8', 8-1 bis 8-6) aufgenommen sind, das um einen Teil der Erwärmungsrohrleitung gewunden ist und mit elektrischem Strom versorgt wird, um den Teil der Erwärmungsrohrleitung durch elektromagnetische Induktion zu erwärmen, **dadurch gekennzeichnet, dass** die Erwärmungsrohrleitung dazu bestimmt ist, lösbar mit einer Unterwasserrohrleitung (4) für den Transport von Fluids verbunden zu werden, und dass sie außerdem Magnetjoche (18) umfasst, die um die Erwärmungsrohrleitung an jedem Ende dieser auf beiden Seiten des Solenoids angeordnet sind, um das von diesem erzeugte Magnetfeld zu enthalten.

2. Station zum Erwärmen nach Anspruch 1, wobei die Erwärmungsrohrleitung eine Vielzahl von Rohrleitungswindungen (20) umfasst, die jeweils mit einem Rohrleitungsabschnitt (22) versehen sind, um den ein Solenoid (8-1 bis 8-6) gewunden ist.

3. Station zum Erwärmen nach Anspruch 2, wobei die Rohrleitungswindungen eine Serpentine bilden.

4. Station zum Erwärmen nach einem der Ansprüche 2 und 3, wobei die Erwärmungsrohrleitung eine Anzahl von Rohrleitungswindungen umfasst, die ein Vielfaches der Anzahl von Phasen des elektrischen Versorgungsstroms ist, wobei die Rohrleitungswindungen jeweils einen Rohrleitungsabschnitt aufweisen, um den ein Solenoid gewunden ist, wobei die Solenoide elektrisch derart montiert sind, dass eine mehrphasige Montage erhalten wird.

5. Station zum Erwärmen nach Anspruch 4, wobei die Erwärmungsrohrleitung sechs Rohrleitungswindungen umfasst, wobei die Solenoide in Serien von zwei montiert sind, um drei Paare von Solenoiden zu bilden, die mit einem dreiphasigen Strom versorgt werden.

6. Station zum Erwärmen nach einem der Ansprüche 1 bis 5, ferner umfassend ein Isoliermaterial (16), das zwischen der Erwärmungsrohrleitung (6) und dem Solenoid (8, 8', 8-1 bis 8-6) angeordnet ist.

7. Station zum Erwärmen nach einem der Ansprüche 1 bis 6, wobei das Solenoid um einen Teil der Erwärmungsrohrleitung in mindestens zwei übereinanderliegenden Schichten gewunden ist.

8. Station zum Erwärmen nach einem der Ansprüche 1 bis 7, wobei das Solenoid in einem Harz eingebettet ist.

9. Station zum Erwärmen nach einem der Ansprüche 1 bis 8, wobei die Erwärmungsrohrleitung und das Solenoid in einer dichten Umhüllung (10) aufgenommen sind, die lösbar und dafür geeignet ist, um mit einer Unterwasserrohrleitung (4) für den Transport von Fluids verbunden zu werden.

10. Station zum Erwärmen nach Anspruch 9, wobei eine Wand der Umhüllung (10) eine Schicht aus einem thermisch isolierenden Material umfasst.

11. Station zum Erwärmen nach einem der Ansprüche 9 und 10, wobei die Umhüllung (10) dafür bestimmt ist, um mit einer Unterwasserrohrleitung für den Transport von Fluids direkt oder durch eine Verbindungsrohrleitung (26) verbunden zu werden.

## Claims

1. A heater station (2, 2', 2") for heating fluids flowing in an undersea pipe network, the station comprising a sealed enclosure (10) housing at least one heater duct (6) made of conductive material, and at least one solenoid (8, 8', 8-1 to 8-6) wound around a portion of the heater duct and electrically powered to heat the heater duct portion by electromagnetic induction, **characterized in that** the heater duct is designed to be removably connected to an undersea pipe (4) for transporting fluids, and **in that** it further comprises magnetic yokes (18) arranged around the heater duct at each end thereof on either side of the solenoid to contain the magnetic field created thereby.

2. A heater station according to claim 1, wherein the heater duct has a plurality of duct turns (20), each provided with a duct section (22) around which a solenoid (8-1 to 8-6) is wound.

3. A heater station according to claim 2, wherein the duct turns form a coil.

4. A heater station according to claim 2 or claim 3, wherein the heater duct has a number of duct turns that is a multiple of the number of phases of the electrical power supply, each duct turn comprising a duct section having a solenoid wound thereabout, the solenoids being electrically connected so as to obtain a polyphase circuit.

5. A heater station according to claim 4, wherein the heater duct has six duct turns, and the solenoids are connected in series in pairs so as to form three pairs of solenoids powered with three-phase electricity.

6. A heater station according to any one of claims 1 to 5, further including insulation (16) interposed between the heater duct (6) and the solenoids (8, 8', 8-1, 8-6).

7. A heater station according to any one of claims 1 to 6, wherein the solenoid is wound around a portion of the heater duct in at least two superposed layers.

8. A heater station according to any one of claims 1 to 7, wherein the solenoid is embedded in resin.

9. A heater station according to any one of claims 1 to 8, wherein the heater duct and the solenoid are housed in a sealed enclosure (10) that is removable and suitable for being connected to an undersea pipe (4) for transporting fluids.

10. A heater station according to claim 9, wherein a wall of the enclosure (10) includes a layer of thermally insulating material.

11. A heater station according to claim 9 or claim 10, wherein the enclosure (10) is for connection to an undersea pipe for transporting fluids either directly or by means of a connection pipe (26).
